# EUROPÄISCHE PATENTSCHRIFT

(11) **EP 3 828 015 B1**
(45) Veröffentlichungstag und Bekanntmachung des Hinweises auf die Patenterteilung: **26.10.2022**
(21) Anmeldenummer: 20209989.1
(22) Anmeldetag: 26.11.2020
(51) Int. Cl.: B60C 25/05, B60B 30/06

(54) **VORRICHTUNG ZUM SPANNEN EINER FELGE EINES FAHRZEUGRADES**
DEVICE FOR TENSIONING A RIM OF A VEHICLE WHEEL
DISPOSITIF DE SERRAGE D'UNE JANTE D'UNE ROUE DE VÉHICULE

(30) Priorität: 28.11.2019 DE 102019132287
(43) Veröffentlichungstag der Anmeldung: 02.06.2021
(73) Patentinhaber: Schenck RoTec GmbH, 64293 Darmstadt (DE)
(72) Erfinder: Peinelt, Andreas, 64319 Pfungstadt (DE); Ortwein, Mark, 64289 Darmstadt (DE); Rogalla, Martin, 64297 Darmstadt (DE)
(74) Vertreter: Haarpatent Patentanwälte Krämer Meyer

(56) Entgegenhaltungen:
- EP-A1- 2 599 649
- EP-A1- 3 086 104
- EP-A1- 3 446 816
- BE-A- 840 808
- US-A- 4 250 936
- US-B1- 7 509 988

## Beschreibung

Die Erfindung betrifft eine Vorrichtung zum Spannen einer Felge eines Fahrzeugrades mit vier Spannelementen, die Auflagenelemente und um ihre Längsachse drehbare Spannarme umfassen, die das Felgenhorn der Felge spannende Spannfinger aufweisen.

Zum Aufziehen eines Reifens auf die Felge eines Fahrzeugrades mit Hilfe einer Montagemaschine ist es erforderlich, das Fahrzeugrad auf dem Tisch der Montagemaschine in Position zu halten. Hierbei müssen die anzuwendenden Haltekräfte so groß sein, dass das Rad entgegen der auftretenden Montagekräfte sicher gehalten wird. Die Felge wird von Spannbacken festgeklemmt, wobei die Felgenachse im Wesentlichen senkrecht steht. Der Reifen wird schräg auf die festgespannte Felge gelegt, wobei ein Teil seiner Schulter in Höhe des unteren Felgenrandes von einer Auflage gehalten wird. Ein umlaufendes Werkzeug zieht zunächst den ersten unteren Reifenwulst über den oberen Felgenrand. Anschließend wird der zweite Reifenwulst mit einem umlaufenden Werkzeug über den Oberen Felgenrand gezogen. Bei diesem Vorgang muss der zweite Reifenwulst in das Tiefbett der Felge rutschen, damit der zweite Reifenwulst ohne Überdehnung über den oberen Felgenrand gedrückt werden kann. Bei manchen Felgen befindet sich das Tiefbett ungefähr auf halber Felgenhöhe, so dass der Reifen bei diesem Montageschritt sehr stark verformt werden muss. Da der auf dem Tisch aufliegende Reifen nicht ausweichen kann, kann diese Verformung zu einer Schädigung des Reifens führen.

US 6,039,104 A offenbart eine Vorrichtung mit einer ebenen Platte, an der paarweise einander gegenüberliegende Spannbacken längs zweier sich rechtwinkelig kreuzender Achsen bewegbar sind. Die Spannbacken sind L-förmig und können in zwei unterschiedlichen Positionen an bewegbaren Trägern befestigt werden, wobei in jeder Position eine andere Spannklaue in Spannposition ist. Die Spannklauen befinden sich in einem Abstand oberhalb der Platte und haben nur kurze Ablageflächen, auf welche die zu spannende Felge auflegbar ist. Die Spannklauen müssen daher vor dem Spannen schon in die Nähe des Spanndurchmessers bewegt werden, damit die Felge abgelegt werden kann.

Bei einer aus US 1,793,863 A bekannten Vorrichtung haben die Spannbacken jeweils zwei einander zugekehrte Spannklauen, von denen eine zum Umgreifen eines inneren Felgenrandes und die andere zum Umgreifen eines äußeren Felgenrandes ausgebildet ist. An den Spannbacken sind kleine Ablageflächen angeordnet, auf weiche die Felge vor dem Spannen aufgelegt werden kann. Weicht die Position der Spannbacken zu sehr vom Felgendurchmesser ab, so sind die Ablageflächen wirkungslos.

Die DE 102 56 870 A1 offenbart eine Vorrichtung zum Spannen der Felge eines Fahrzeugrades, insbesondere zur Reifenmontage, mit einer Ablage, auf welcher die Felge mit einer Seite ablegbar ist. Radial zur Felge sind Spannbacken zum Festspannen des der Ablage benachbarten Felgenrandes bewegbar, wobei an einem Träger zwei Paare von Spannbacken vorgesehen sind, deren Bewegungsbahnen einander rechtwinklig kreuzen. Die Bewegung der Spannbacken wird durch einen Hubzylinder erzeugt und ist durch ein Getriebe synchronisiert.

Eine gattungsgemäße Spannvorrichtung ist aus EP 2 599 649 A1 bekannt, die ein Werkzeug zum Stützen und Verriegeln einer Felge oder eines bereiften Rades in einer Position auf einer Reifenmontage- und -demontagemaschine für Kraftfahrzeugräder beschreibt, die mit einem Stütztisch mit einem axialen Loch oder einer Öffnung ausgestattet ist. Das Werkzeug umfasst Spannelemente, die um ihre Längsachse bewegbare Spannarme mit Auflagenflächen aufweisen. Eine ähnliche Vorrichtung ist aus BE 840 808 A bekannt, wobei hier die Spannarme, bzw. die mit dem Felgenhorn in Kontakt bringbare Spannfläche zylindrisch ausgebildet ist.

Aus US 7 509 988 B1 ist eine Spannvorrichtung für Felgen bekannt, die zwei radial verschiebbare Spannelemente umfasst, die die Felge gegen ein feststehendes Anschlagelement drücken. Jedes Spannelement umfasst zwei benachbart zueinander angeordnete Rädchen, die in Kontakt mit dem Felgenhorn bringbar sind.

US 4 250 936 A offenbart eine Spannvorrichtung für Felgen, bei der die Spannelemente über ein Gestänge bewegbar und somit an unterschiedliche Felgengrößen anpassbar sind. Die Felge wird von drei zylindrisch geformten Spannflächen gespannt.

Nachteilig bei den bekannten Spannvorrichtungen ist, dass diese in der Regel eingeschränkt bewegbar sind und ein Einstellen auf die Felgengröße nur schwer möglich ist. Somit ist ein Ummontieren der Spannvorrichtung beim Felgenwechsel oftmals notwendig. Außerdem kommt es bei der Nutzung einer nicht passenden Spannvorrichtung häufig zu Beschädigungen der Felge, da die Felge nur mit wenigen Spannmitteln, die entsprechend höhere Kräfte einleiten müssen, verspannt wird.

Der Erfindung liegt die Aufgabe zugrunde, eine bewegliche Spannvorrichtung bereitzustellen, mit der Felgen sicher und ohne Beschädigung spannbar sind.

Die Aufgabe wird erfindungsgemäß dadurch gelöst, dass eine Vorrichtung zum Spannen einer Felge eines Fahrzeugrades bereitgestellt wird, mit wenigstens vier zur Felge bewegbaren Spannelementen, die Spannarme und Auflagenelemente mit Auflagenflächen umfassen, auf denen ein Felgenhorn der Felge auflegbar ist, wobei die Spannarme um ihre Längsachse drehbar in den Spannelementen gelagert sind und endständig die Auflagenflächen überragende Spannfinger aufweisen, die mit dem auflegbaren Felgenhorn in Spannkontakt bringbare Spannflächen aufweisen, wobei die Spannfinger einen ersten zur Auflagefläche senkrechten Spannbereich und einen benachbart zu diesem vorliegenden und die Spannfläche formenden zweiten Spannbereich aufweisen, wobei der zweite Bereich gegenüber dem ersten Bereich geneigt ist und der erste und/oder zweite Spannbereich der Spannfinger eben oder konkav ausgestaltet sind bzw. ist. Dadurch, dass die Spannarme drehbar sind, ist eine Einstellbarkeit der Spannvorrichtung auf die Felgengröße möglich. Die Spannvorrichtung spannt die Felge sicher an vier Punkten, so dass die Spannkräfte gleichmäßig eingeleitet werden und eine Ausrichtung der Spannfinger am Felgenhorn ermöglicht wird. Es hat sich herausgestellt, dass mit der Spannvorrichtung Felgendurchmesser von 15 bis 24 Zoll spannbar sind. Die erfindungsgemäße Vorrichtung ist insbesondere bei der Montage von Scheibenrädern in einer Reifenmontagestation als Spannvorrichtung vorgesehen, bei der die Felge gespannt werden muss, um ein Aufziehen des Reifens zu ermöglichen.

In einer Ausgestaltung ist vorgesehen, dass die Auflagenelemente um ihre Längsachse drehbar in den Spannelementen gelagert sind. Zusätzlich zur Drehbarkeit der Spannarme kann eine Drehbarkeit der Auflagenelemente vorteilhaft sein. Alternativ können die Auflagenelemente derart ausgestaltet sein, dass sie zylindrisch gestaltet sind und im Wesentlichen auf ihrer vollständigen Oberseite Auflagenflächen zur Auflage des Felgenhorns aufweisen. Hierdurch kann je nach Position des Spannarms eine Auflage des Felgenhorns sichergestellt werden. Die Oberseite der Auflagenelemente kann mit einer reibungsmindernden Schicht beschichtet sein.

Um ein tangentiales Anlegen der Spannfläche an das Felgenhorn zu erreichen, ist vorgesehen, dass die Spannfinger einen ersten senkrechten Spannbereich und einen benachbart zu diesem vorliegenden und die Spannfläche formenden zweiten Spannbereich aufweisen, wobei der zweite Bereich gegenüber dem ersten Bereich geneigt ist. Wenn die Spannelemente in Richtung der Felge bewegt werden und die Spannarme eindrehen, treffen die Spannflächen auf das Felgenhorn und leiten Spannkräfte in das Felgenhorn. In einer Ausgestaltung ist vorgesehen, dass der Neigungswinkel zwischen dem ersten Spannbereich und dem zweiten Spannbereich mehr als 90° beträgt. Hierdurch wird ausreichend Reibmoment erzeugt und eine Beschädigung der Felge verhindert.

Es ist bevorzugt, dass die Spannarme oder die Auflagenelemente vertikal bewegbar sind, so dass der Abstand zwischen Spannfläche und Auflagefläche veränderbar ist. Durch die vertikale Bewegung, bei der entweder die Spannarme oder die Auflagenelemente eingefahren oder ausgefahren werden, kann der Abstand zwischen Auflageflächen und Spannflächen an die Felgenhorngröße angepasst werden. Denn für kleine Felgendurchmesser, deren Felgenhorn beim Eindrehen der Spannelemente nicht mit den Spannflächen, sondern den ersten Spannbereichen in Kontakt kommen, können die Spannarme oder die Auflagenelemente vertikal bewegt werden, so dass die Spannflächen in Kontakt mit dem Felgenhorn gebracht werden und Spannkraft in dieses einleiten können.

In einer weiteren Ausgestaltung ist vorgesehen, dass jeweils ein Hubzylinder mit einem Spannarm oder einem Auflagenelement in Wirkkontakt gebracht am Spannelement vorliegt und der Spannarm oder ein Auflagenelement durch einen Abwärts- und Aufwärtshub des Hubzylinders vertikal bewegbar ist. Die Vertikalbewegung des Spannarms oder des Auflagenelements kann durch einen pneumatisch oder hydraulisch beaufschlagbaren Hubzylinder erreicht werden, dessen Kolbenstange mit dem Spannarm oder dem Auflagenelement wirkverbunden ist. Hierdurch wird ausreichend Kraft erzeugt, eine Vertikalbewegung und ein Planspannen des Felgenhorns zu erreichen.

Um Hertzsche Kontaktdrücke an dem Felgenhorn noch stärker zu vermeiden, können die Spannflächen der Spannfinger, insbesondere der zweite Spannbereich konkav ausgestaltet sein. Es kann jedoch auch vorteilhaft sein, beide Spannbereiche der Spannfinger konkav zu gestalten. Alternativ kann es vorteilhaft sein, dass der erste und/oder zweite Spannbereich der Spannfinger eben ausgestaltet sind bzw. ist.

Die Spannelemente können vorteilhafterweise in einer Ebene, die im Wesentlichen senkrecht zur Längsachse der auflegbaren Felge liegt, bewegt werden. Hierdurch kann der radiale Abstand zum Felgenhorn verändert werden. In einer Ausgestaltung ist vorgesehen, dass die Spannelemente sie durchragende Wellen aufweisen, die mit einem unterhalb der Spannelemente angeordneten Antrieb verbunden sind, so dass die Spannelemente kreisbogenförmig in einer Ebene senkrecht zur Längsachse einer auflegbaren Felge bewegbar sind. Durch die Bewegung der Spannelemente in Richtung der Felge, können die Spannflächen in Wirkkontakt mit dem Felgenhorn gebracht werden. Der Antrieb kann beispielsweise als pneumatisch oder hydraulisch beaufschlagbarer Hubzylinder ausgestaltet sein. Ein Elektroantrieb kann alternativ zum Einsatz kommen.

Um die Bewegung der Spannelemente zu synchronisieren und somit ein gleichmäßiges Anlegen der Spannfinger zu garantieren und vorallem ein Verschieben der Felge aus einer Zentrierung heraus durch eine Bewegung z. B. eines Spannelements zu verhindern, kann vorgesehen sein, dass jeweils zwei benachbart zueinander angeordnete Spannelemente über Zahnräder bewegungsübertragend in Verbindung stehen, so dass beide Spannelemente synchron bewegbar sind. Die Zahnräder können beispielsweise an den Spannelementen oder den, die Spannelemente durchragende und mit dem Antrieb verbindbare Wellen drehfest angreifen. Eine Bewegung eines Spannelements bewirkt somit die synchrone Bewegung des benachbarten und über Zahnräder in Wirkkontakt stehenden Spannelements.

Ferner kann vorgesehen sein, dass die Bewegung der vier Spannelemente synchronisiert ist. Es ist bevorzugt, dass die Bewegung von zwei über Zahnräder wirkverbundener Spannelemente mit der der gegenüberliegend angeordneten und über Zahnräder wirkverbundener Spannelemente über eine an den Wellen der Spannelemente angreifenden und dem Antrieb verbundenen Koppelstange synchronisiert ist. Die Koppelstange kann über einen Hebel mit den Wellen der Spannelemente und dem Antrieb verbunden sein, so dass die Kraft des Antriebs über die Hebel und die Koppelstange in die Wellen der Spannelemente leitbar ist und in einer synchronen Bewegung der Spannelemente resultiert. Es kann auch vorteilhaft sein, anstelle eines Antriebes zwei Antriebe zu nutzen, wobei jeweils ein Antrieb zwei miteinander über den Zahnradantrieb in Wirkkontakt stehende Spannelemente bewegt, wobei die Bewegung der vier Spannelemente bzw. der beiden Antriebe nichtsdestotrotz über die dargestellte Koppelstange synchronisierbar ist.

Die Erfindung wird nachfolgend anhand von Ausführungsbeispielen der Erfindung näher erläutert, die in der Zeichnung dargestellt sind. Es zeigen
- Figur 1: eine perspektivische Darstellung einer Spannvorrichtung mit einer Felge,
- Figur 2: eine weitere perspektivische Darstellung einer Spannvorrichtung mit einer Felge,
- Figur 3: eine vergrößerte Ansicht eines Spannelements,
- Figur 4: eine Schnittdarstellung eines Spannelements,
- Figur 5: eine Ausgestaltung, bei der der Spannarm eingefahren ist,
- Figur 6: eine perspektivische Ansicht einer Spannvorrichtung mit Reifenhebern,
- Figur 7: eine Seitenansicht einer Spannvorrichtung mit Reifenhebern, Felge und Reifen und
- Figur 8: eine Spannvorrichtung mit Felgenhalter.

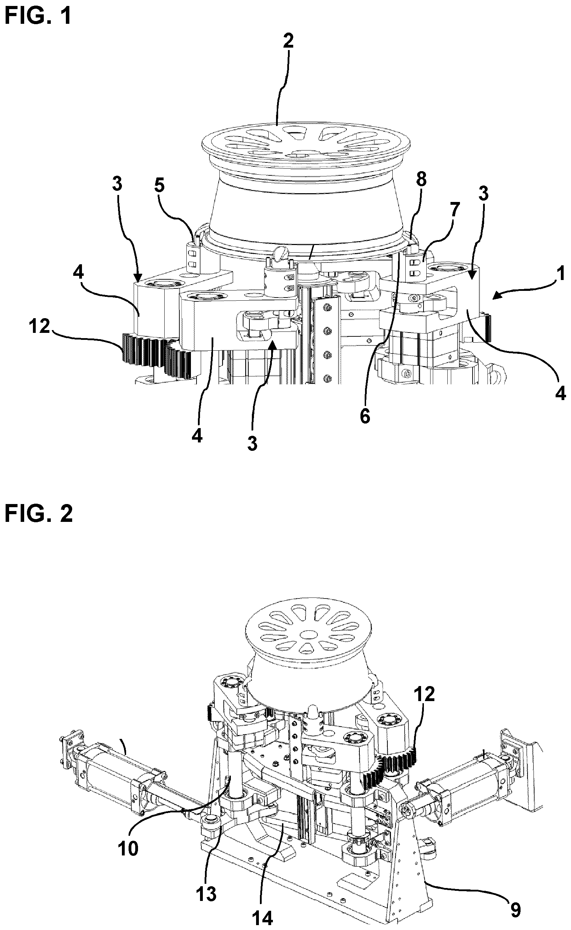

Figur 1 zeigt eine perspektivische Darstellung einer Spannvorrichtung mit einer eingespannten Felge und Figur 2 zeigt eine weitere perspektivische Darstellung einer Spannvorrichtung mit einer Felge. Die Spannvorrichtung 1 kann Bestandteil einer nicht dargestellten Reifenmontagelinie sein, bei der die Felge 2 mithilfe einer ebenfalls nicht dargestellten Transportvorrichtung zur Spannvorrichtung 1 gefördert wird, in der die Felge 2 gehalten wird, damit der Reifen aufgezogen werden kann. Hierfür muss die Felge 2 von der Spannvorrichtung 1 in einer definierten Position sicher gespannt werden, damit das Aufziehen des Reifens erfolgreich ist.

Die Spannvorrichtung 1 umfasst vier Spannelemente 3, die jeweils einen Grundkörper 4 aufweisen, der an seinem freien Ende eine Aufnahme für einen im Grundkörper 4 drehfrei gelagerten Spannarm 5 aufweist. Die Felge 2 liegt auf Auflageflächen 6 auf, die von Auflagenelementen 7 gebildet werden. Gespannt wird die Felge 2 von den, die Auflageflächen 6 überragenden, endständig an den Spannarmen 5 vorliegenden Spannfingern 8. Die Spannarme 5 spannen die Felge vorteilhafterweise in einem Abstand von 45° zueinander.

Die Grundkörper 4 können an einem Rahmen 9 befestigt sein, der Bestandteil der Reifenmontagelinie sein kann oder leicht in diese integrierbar ist. Die Grundkörper 4 weisen an ihren Enden, die den freien Enden entgegengesetzt sind, Durchbrüche auf, in denen drehfest mit den Grundkörpern verbundene Wellen 10 gelagert sind, die mit einem unterhalb der Spannelemente 3 angeordneten Antrieb wirkverbunden sind. Im dargestellten Beispiel sind zwei Antriebe vorhanden, die als pneumatisch oder hydraulisch beaufschlagbarer Hubzylinder ausgestaltet sind. Alternativ kann ein elektromotorischer Antrieb zum Einsatz kommen.

Ferner ist ein Zahnradantrieb vorhanden, bei dem jeweils ein Zahnrad 12 derart an einem Spannelement 3 oder seiner Welle 10 angeordnet ist, dass die Zahnräder 12 zweier benachbarter Spannelemente 3 in Eingriff miteinander gebracht vorliegen, so dass Bewegungen von jeweils zwei Spannelementen 3 miteinander synchronisierbar sind. Die Bewegung der miteinander verzahnten Spannelemente 3 wird über den korrespondierenden Antrieb 5 erreicht, der über einen Hebel 13 oder Getriebestangen an den Wellen 10 der Spannelemente 3 angreift und eine Drehbewegung der Wellen 10 und folglich eine kreisbogenförmige Bewegung der miteinander verzahnten Spannelemente 3 bewirkt. Die Bewegung der Spannelemente 3 erfolgt kreisbogenförmig in einer Ebene, die im Wesentlichen senkrecht zur Längsachse der auf den Auflageflächen 6 aufgelegten Felge 2 liegt.

Die Spannvorrichtung 1 umfasst in einer Ausgestaltung also vier Spannelemente 3, die jeweils in bewegungssynchronisierten Paaren von Spannelementen 3 zusammengefasst sind, wobei sich die Paare der Spannelemente 3 im Wesentlichen gegenüberstehen. Es können auch mehr als vier Spannelemente vorgesehen sein.

Wie in Figur 2 erkennbar, sind die Bewegungen der beiden Paare von Spannelementen 3 durch einen nicht näher dargestellten Hebelmechanismus über eine Koppelstange 14 synchronisiert, der unterhalb der Spannelemente 3 angeordnet ist und an den mit der Welle 10 drehsicher verbundenen Hebeln 13 angreift. Die notwendige Kraft zur Bewegung der über die Koppelstange 14 miteinander bewegungssynchronisierten Spannelemente 3 wird über die Antriebe bereitgestellt. Hierdurch wird eine synchrone, insbesondere kreisbogenförmige Bewegung aller vier Spannelemente 3 erreicht. Bevor die Felge 2 auf die Auflageflächen 6 aufgelegt wird, werden die Spannelemente 3 synchron in Position bewegt, so dass das Felgenhorn auf alle vier Auflageflächen 6 auflegbar ist.

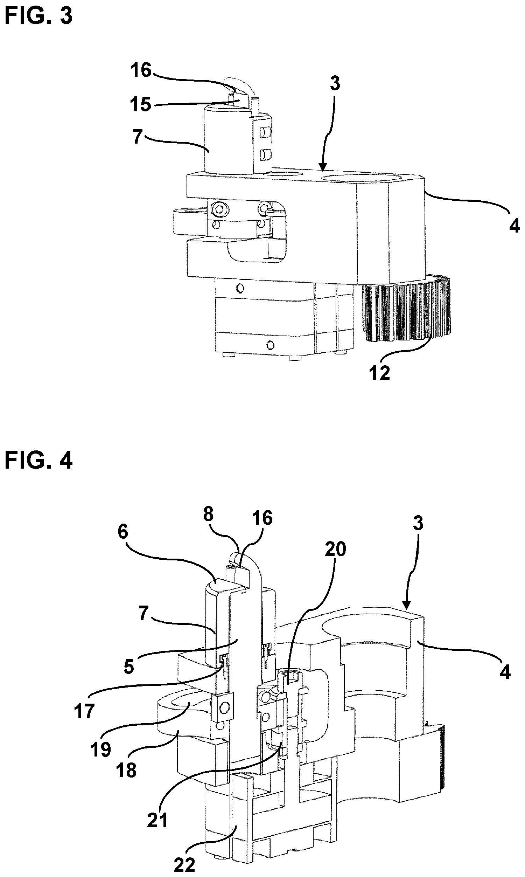

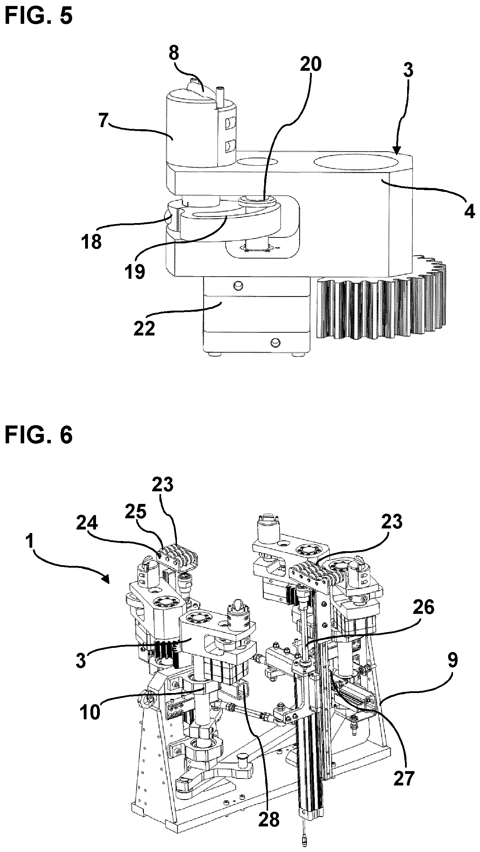

Figur 3 zeigt eine vergrößerte Ansicht eines Spannelements, Figur 4 eine Schnittdarstellung eines Spannelements und Figur 5 eine Ausgestaltung, bei der der Spannarm eingefahren ist. Im nachfolgenden werden Ausgestaltungen anhand eines Spannarms erläutert, wobei dies auf alle Spannarme anzuwenden ist.

Jeder Grundkörper 4 der Spannelemente 3 wird an seinem freien Ende von dem Spannarm 5 durchragt, der mit seinem Spannfinger 8 die von dem Auflagenelement 7 gebildete Auflagefläche 6 überragt. Der Spannfinger 8 weist einen ebenen, im Wesentlichen senkrechten zur Auflagefläche 6 orientierten ersten Spannbereich 15 und einen gegenüber dem ersten Spannbereich 15 geneigten zweiten Spannbereich 16 auf, der keilförmig ausgestaltet ist. Je nach Felgengröße können beide Spannbereich 15, 16 oder lediglich der zweite Spannbereich 16 mit dem Felgenhorn einer Felge 2 in Kontakt kommen Jedoch wird die für das Verspannen der Felge notwendige Spannkraft über den zweiten Spannbereich 16, der die Spannfläche bildet, in das Felgenhorn eingeleitet.

Die Spannfläche kann mit einer reibungsmindernden Schicht beschichtet sein. Im dargestellten Beispiel sind der erste Spannbereich 15 und der zweite Spannbereich 16 im Wesentlichen eben ausgebildet. Es kann aber auch vorteilhaft sein, dass der erste Spannbereich 15, der zweite Spannbereich 16 oder beide Spannbereiche 15, 16 konkav ausgestaltet sind. Die Oberseite und Rückseite des Spannarms 5 bzw. des Spannfingers 8 kann abgerundet und glatt ausgestaltet sein, damit eine minimale Störkontur gegeben ist und der Reifen bei der Montage ungehindert ausweichen kann und nicht beschädigt wird. Der Spannarm 5 kann zylindrisch oder eckig ausgestaltet sein.

Der Spannarm 5 wird von dem zylinderförmig ausgestalteten Auflagenelement 7 umgeben, das zweiteilig ausgestaltet ist, wobei sich ein hinterer Teil des Auflagenelements 7 an die Rückseite und ein vorderes Teil des Auflagenelementes 7 an die Vorderseite des Spannarms 5 legt. Die beiden Teile können eine unterschiedliche Höhe aufweisen und mittels Schrauben miteinander und mit dem Grundkörper 4 verbunden sein. Im Auflagenelement 7 liegt eine umlaufende Nut 17 vor, in die Köpfe von Befestigungsmittel, wie z. B. Schrauben greifen und das Auflagenelement 7 axial sichern. Beide Teile bilden auf ihren Oberseiten Flächen, wobei die Fläche des vorderen Teils die Auflagefläche 6 für das Felgenhorn bildet. Es kann jedoch auch bevorzugt sein, dass die Oberseiten beider Teile Auflagenflächen darstellen. In dem Auflagenelement 7, benachbart zu dem Spannfinger 8 sind zwei Stifte angeordnet, die beim Grobausrichten des Spannarms 5 hilfreich sein können.

In einer Ausgestaltung kann vorgesehen sein, dass der Spannarm 5 oder der Spannarm 5 und das Auflagenelement 7 um ihre Längsachsen drehbar sind. Dies kann der Ausrichtung des Spannarms 5 und ggf. der Auflagefläche 6 dienen. Die Drehung kann beispielsweise händisch oder über einen elektromotorischen Antrieb vorgenommen werden. Für die Ausgestaltung, dass lediglich der Spannarm 5 drehbar ist, kann es vorteilhaft sein, wenn die Oberseite des Auflagenelements vollständig als Auflagenfläche ausgestaltet ist. Hierdurch überragt der Spannfinger 8 auch nach Drehung immer eine Auflagefläche 6. Die Drehung des Spannarms 5 bzw. des Auflagenelements 7 kann mittels Fixiermittel verhindert werden, die zum Beispiel in Gestalt eines Bolzens in eine nutförmige Ausnehmung im Spannarm 5 oder entsprechend im Auflagenelement 7 eingreifen und den Spannarm 5 oder das Auflagenelement 7 in ihrer Position arretieren, wobei ein Entfernen des Bolzens erneut die Drehung ermöglicht. Die Drehung und Arretierung des Spannarms 5 bzw. des Auflagenelements 7 können händisch oder automatisch vorgenommen werden.

Des Weiteren kann vorgesehen sein, wie in Figur 4 angedeutet, dass der Spannarm 5 einziehbar gestaltet ist und sich vertikal bewegen lässt. Hierdurch lässt sich die durch den zweiten Spannbereich 16 gebildete Spannfläche mit dem Felgenhorn in Kontakt bringen, falls der Durchmesser des auf der Auflagefläche 6 aufliegenden Felgenhorns zu gering ist und das Felgenhorn nicht mit dem zweiten Spannbereich 16, also der Spannfläche in Kontakt gelangt. Der Spannarm 5 kann im Wesentlichen bis zum Übergang vom ersten Spannbereich 15 in den zweiten Spannbereich 16 einziehbar sein, so dass der Abstand zwischen Auflagefläche 6 und Spannfläche, also dem zweiten Spannbereich 16 verringert wird. Selbstverständlich ist die entgegengesetzte Konstellation ebenfalls möglich, bei der der Abstand zwischen Auflagefläche 6 und zweiten Spannbereich 16 vergrößert werden muss, da der Durchmesser des auf der Auflagefläche 6 aufliegendem Felgenhorn zu groß ist.

Für das Ausführen der Vertikalbewegung ist der Spannarm 5 mit einem Klemmelement 18 drehfest verbunden, das ein bogenförmiges Langloch 19 aufweist, in das ein Bolzen 20 einer Zugvorrichtung 21 eingreift. Die Zugvorrichtung ist mit einem unterhalb des Spannelements 3 angeordneten Hubzylinder wirkverbunden, so dass ein Aufwärts- oder Abwärtshub des Hubzylinders eine Auf- oder Abwärtsbewegung des Spannarms 5 bewirkt. Als Hubzylinder kann beispielsweise ein Pneumatikzylinder oder Hydraulikzylinder verwendet werden. Alternativ kann auch ein elektromotorischer Antrieb genutzt werden. Figur 5 zeigt eine Ausgestaltung, bei der der Spannarm 5 eingefahren ist und durch den Hubzylinder 22 vertikal bewegt wurde.

Um eine Felge 2 zu Spannen, wird diese von einer Transportvorrichtung zur Spannvorrichtung 1 befördert, wobei die z. B. mit einer Computereinheit verbundene Spannvorrichtung 1 aufgrund der Felgengröße die Spannelemente 3 derart positioniert, dass das Felgenhorn der Felge auf die Auflagefläche 6 auflegbar ist. Das Verspannen des Felgenhorns kann dann derart erfolgen, dass entweder Spannelemente 3 synchron die Spannflächen in Kontakt zum Felgenhorn bewegen und dieses durch das Eindrehen der Spannelemente 3 oder der Spannarme 5 verspannt wird. Alternativ kann durch eine Vertikalbewegung der Spannarme 5 oder der Auflagenfläche 6 das auf den Auflagenflächen 6 aufgelegte Felgenhorn in Kontakt mit dem zweiten Spannbereich, also der Spannfläche gebracht werden und die Felge durch über die zweiten Spannbereiche in das Felgenhorn eingeleitete Planspannkraft verspannen.

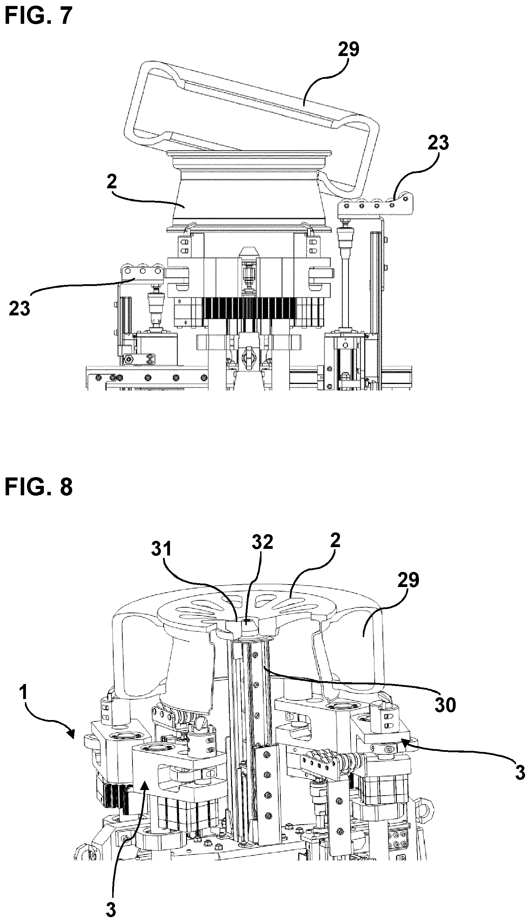

Figur 6 stellt eine perspektivische Ansicht einer Spannvorrichtung mit Reifenhebern und Figur 7 eine Seitenansicht einer Spannvorrichtung mit Reifenhebern, Felge und Reifen dar. Die Spannvorrichtung 1 kann zwei Reifenheber 23 umfassen, die jeweils aus hintereinander in einem Käfig 24 angeordnete Rollen 25 bestehen, der mithilfe einer Hebevorrichtung 26 höhenverstellbar an der Spannvorrichtung 1 angeordnet sind. In der Ausgestaltung sind zwei gegenüberliegend angeordnete Reifenheber 23 dargestellt. Es können jedoch auch weniger oder mehr Reifenheber 23 zum Einsatz kommen. Die Reifenheber 23 sind auf einer am Rahmen 9 gehalterten Linearführung 27 verschiebbar. Die beiden Reifenheber 23 befinden sich auf einem Radius, der zu dem montierten Reifen passend ist. Die Reifenheber 23 sind über einen Hebelmechanismus mit der Welle 10 der Spannelemente 3 verbunden, so dass eine Bewegung der Spannelemente 3 auch eine lineare Bewegung der Reifenheber 23 auf der Linearführung bewirkt. Hierdurch kann sichergestellt werden, dass die Reifenheber 23 sich auf einem Radius befinden, der zum Reifen der gespannten Felgengröße passt. Hintergrund hierfür ist, dass der Reifenwulstdurchmesser immer zur Felgengröße passt.

In Figur 7 ist angedeutet, wie die Reifenheber 23 die Montage des Reifens 29 auf der Felge 2 unterstützen, indem sie den Reifen 29 richtig positionieren, bzw. drücken. Im dargestellten Beispiel hat der Reifenheber 23 den unteren Wulst des Reifens 29 angehoben, so dass dieser vom nicht dargestellten Reifenschieber in das Tiefbett der Felge 2 geschoben werden kann. Weitere Reifenmontagewerkzeuge sind Bestandteil der Reifenmontage, jedoch nicht in den Figuren gezeigt. Die Spannvorrichtung kann bei Bedarf um weitere Montagewerkzeuge ergänzt werden, deren Bewegung ebenso synchronisiert zu der Bewegung der Spannelemente erfolgen kann.

Figur 8 zeigt eine Ausgestaltung der Spannvorrichtung mit einem Felgenhalter. Im Wesentlichen mittig in der Spannvorrichtung 1 kann ein höhenverstellbarer Felgenhalter 30 angeordnet sein. Nachdem der Reifen 29 auf die Felge 2 aufgezogen wurde und bevor die Spannelemente 3 die Felge 2 freigeben und auseinanderfahren, greift der höhenverstellbare Felgenhalter 30 mit seinem endständig angeordneten Aufnahmekörper 31 an der Zentralbohrung 32 der Felge 2 an und fixiert diese radial. Hierdurch wird verhindert, dass das montierte Rad durch das Auseinanderfahren der Spannelemente 3 aus seiner Position bewegt wird, indem die Spannelemente 3 an dem Reifen 29 beim Bewegen hängenbleiben. Der Aufnahmekörper 32 ist mithilfe von Schienen, die beispielsweise elektromotorisch oder pneumatisch verfahrbar sind, vertikal bewegbar.

Abschließend soll bemerkt werden, dass obige Ausgestaltungen beispielhaft anhand eines Spannelementes erläutert wurden, jedoch auf alle Spannelemente mit ihren Bestandteilen übertragbar sind.

## Patentansprüche

1. Vorrichtung (1) zum Spannen einer Felge (2) eines Fahrzeugrades mit wenigstens vier zur Felge (2) bewegbaren Spannelementen (3), die Spannarme (5) und Auflagenelemente (7) mit Auflagenflächen (6) umfassen, auf denen ein Felgenhorn der Felge (2) auflegbar ist, wobei die Spannarme (5) um ihre Längsachse drehbar in den Spannelementen (3) gelagert sind und endständig die Auflagenflächen (6) überragende Spannfinger (8) aufweisen, die mit dem auflegbaren Felgenhorn in Spannkontakt bringbare Spannflächen aufweisen, **dadurch gekennzeichnet, dass** die Spannfinger (8) einen ersten zur Auflagefläche (6) senkrechten Spannbereich (15) und einen benachbart zu diesem vorliegenden und die Spannfläche formenden zweiten Spannbereich (16) aufweisen, wobei der zweite Bereich (16) gegenüber dem ersten Bereich (15) geneigt ist und der erste und/oder zweite Spannbereich (15, 16) der Spannfinger (8) eben oder konkav ausgestaltet sind bzw. ist.

2. Vorrichtung (1) nach Anspruch 1, **dadurch gekennzeichnet, dass** der Neigungswinkel zwischen dem ersten Spannbereich (15) und dem zweiten Spannbereich (16) mehr als 90° beträgt.

3. Vorrichtung (1) nach einem der vorhergehenden Ansprüche, **dadurch gekennzeichnet, dass** die Spannarme (5) oder die Auflagenelemente (7) vertikal bewegbar sind, so dass der Abstand zwischen Spannfläche und Auflagefläche (6) veränderbar ist.

4. Vorrichtung (1) nach Anspruch 3, **dadurch gekennzeichnet, dass** jeweils ein Hubzylinder (22) mit einem Spannarm (5) oder einem Auflagenelement (7) in Wirkkontakt gebracht am Spannelement (3) vorliegt und der Spannarm (5) oder das Auflagenelement (7) durch einen Abwärts- und Aufwärtshub des Hubzylinders (22) vertikal bewegbar ist.

5. Vorrichtung (1) nach einem der vorhergehenden Ansprüche, **dadurch gekennzeichnet, dass** die Spannelemente (3) sie durchragende Wellen (10) aufweisen, die mit einem unterhalb der Spannelemente (3) angeordneten Antrieb (11) verbunden sind, so dass die Spannelemente (3) kreisbogenförmig in einer Ebene senkrecht zur Längsachse der auflegbaren Felge (2) bewegbar sind.

6. Vorrichtung (1) nach einem der vorhergehenden Ansprüche, **dadurch gekennzeichnet, dass** jeweils zwei benachbart zueinander angeordnete Spannelemente (3) über Zahnräder (12) bewegungsübertragend in Verbindung stehen, so dass beide Spannelemente (3) synchron bewegbar sind.

7. Vorrichtung (1) nach Anspruch 6, **dadurch gekennzeichnet, dass** die Bewegung von zwei über Zahnräder (12) wirkverbundener Spannelemente (3) mit der Bewegung gegenüberliegend angeordneter und über Zahnräder (12) wirkverbundener Spannelemente (3) über eine an den Wellen (10) der Spannelemente (3) angreifenden und dem Antrieb (11) verbundenen Koppelstange (14) synchronisiert ist.

8. Vorrichtung (1) nach einem der vorhergehenden Ansprüche, **dadurch gekennzeichnet, dass** die Auflagenelemente (7) um ihre Längsachse drehbar in den Spannelementen (3) gelagert sind.

9. Vorrichtung (1) nach einem der vorhergehenden Ansprüche, **dadurch gekennzeichnet, dass** die Spannvorrichtung (1) wenigstens zwei Reifenheber (23) aufweist, die über einen Hebelmechanismus (28) derart mit den Spannelementen (3) verbunden sind, dass eine Bewegung der Spannelemente (3) eine lineare Bewegung der Reifenheber (23) bewirkt.

10. Vorrichtung (1) nach einem der vorhergehenden Ansprüche, **dadurch gekennzeichnet, dass** die Spannvorrichtung (1) einen vertikal bewegbaren Felgenhalter (30) aufweist, der in Kontakt mit einer Zentralbohrung der Felge (2) bringbar ist.

## Claims

1. Device (1) for clamping a rim (2) of a vehicle wheel, comprising at least four clamping elements (3) which can be moved with respect to the rim (2) and comprise clamping arms (5) and support elements (7) having support surfaces (6) on which a rim flange of the rim (2) can be placed, wherein the clamping arms (5) are rotatably mounted, about their longitudinal axis, in the clamping elements (3), and have clamping fingers (8) at the end that protrude beyond the support surfaces (6), which fingers have clamping surfaces which can be brought into clamping contact with the placeable rim flange, **characterised in that** the clamping fingers (8) have a first vertical clamping region (15) and a second clamping region (16) which is adjacent thereto and forms the clamping surface, the second region (16) being inclined with respect to the first region (15) and the first and/or second clamping region (15, 16) of the clamping fingers (8) are or is flat or concave.

2. Device (1) according to claim 1, **characterised in that** the angle of inclination between the first clamping region (15) and the second clamping region (16) is more than 90°.

3. Device (1) according to any of the preceding claims, **characterised in that** the clamping arms (5) or the support elements (7) are vertically movable such that the distance between the clamping surface and the support surface (6) can be changed.

4. Device (1) according to claim 3, **characterised in that** a lifting cylinder (22) is provided in each case on the clamping element (3) so as to be brought into operative contact with a clamping arm (5) or a support element (7), and the clamping arm (5) or the support element (7) is vertically movable by a downward and upward stroke of the lifting cylinder (22).

5. Device (1) according to any of the preceding claims, **characterised in that** the clamping elements (3) have shafts (10) which penetrate said elements and are connected to a drive (11) arranged below the clamping elements (3) such that the clamping elements (3) can be moved in a circular arc in a plane perpendicular to the longitudinal axis of the placeable rim (2).

6. Device (1) according to any of the preceding claims, **characterised in that** each two clamping elements (3) arranged adjacently to one another are connected via gear wheels (12) so as to transmit movement, such that the two clamping elements (3) can be moved synchronously.

7. Device (1) according to claim 6, **characterised in that** the movement of two clamping elements (3) that are operatively connected via gear wheels (12) is synchronised, via a coupling rod (14) that is connected to the drive (11) and acts on the shafts (10) of the clamping elements (3), with the movement of opposite clamping elements (3) that are operatively connected via gearwheels (12).

8. Device (1) according to any of the preceding claims, **characterised in that** the support elements (7) are rotatably mounted, about their longitudinal axis, in the clamping elements (3).

9. Device (1) according to any of the preceding claims, **characterised in that** the clamping device (1) has at least two tyre levers (23) which are connected to the clamping elements (3) via a lever mechanism (28) such that a movement of the clamping elements (3) causes a linear movement of the tyre levers (23).

10. Device (1) according to any of the preceding claims, **characterised in that** the clamping device (1) has a vertically movable rim holder (30) which can be brought into contact with a central hole in the rim (2).

## Revendications

1. Dispositif (1) pour serrer une jante (2) d'une roue de véhicule avec au moins quatre éléments de serrage (3) mobiles par rapport à la jante (2), qui comprennent des bras de serrage (5) et des éléments d'appui (7) avec des surfaces d'appui (6) sur lesquelles un rebord de jante de la jante (2) peut être posé, les bras de serrage (5) étant logés dans les éléments de serrage (3) de manière à pouvoir tourner autour de leur axe longitudinal et présentant à leur extrémité des doigts de serrage (8) qui dépassent des surfaces d'appui (6) et qui présentent des surfaces de serrage pouvant être amenées en contact de serrage avec le bord de jante pouvant être posé, **caractérisé en ce que** les doigts de serrage (8) présentent une première zone de serrage (15) perpendiculaire à la surface d'appui (6) et une deuxième zone de serrage (16) adjacente à celle-ci et formant la surface de serrage, la deuxième zone (16) étant inclinée par rapport à la première zone (15) et la première et/ou la deuxième zone de serrage (15, 16) des doigts de serrage (8) étant de forme plane ou concave.

2. Dispositif (1) selon la revendication 1, **caractérisé en ce que** l'angle d'inclinaison entre la première zone de serrage (15) et la deuxième zone de serrage (16) est supérieur à 90°.

3. Dispositif (1) selon l'une des revendications précédentes, **caractérisé en ce que** les bras de serrage (5) ou les éléments d'appui (7) sont mobiles verticalement de sorte que la distance entre la surface de serrage et la surface d'appui (6) peut être modifiée.

4. Dispositif (1) selon la revendication 3, **caractérisé en ce qu'**un vérin de levage (22) avec un bras de serrage (5) ou un élément d'appui (7) est présent en contact actif sur chaque élément de serrage (3), et le bras de serrage (5) ou l'élément d'appui (7) est mobile verticalement par une course du vérin de levage (22) vers le bas et vers le haut.

5. Dispositif (1) selon l'une des revendications précédentes, **caractérisé en ce que** les éléments de serrage (3) présentent des arbres (10) qui les traversent et qui sont reliés à un entraînement (11) disposé en dessous des éléments de serrage (3), de sorte que les éléments de serrage (3) peuvent être déplacés en arc de cercle dans un plan perpendiculaire à l'axe longitudinal de la jante (2) pouvant être posée.

6. Dispositif (1) selon l'une des revendications précédentes, **caractérisé en ce que** deux éléments de serrage (3) disposés au voisinage l'un de l'autre sont reliés par des roues dentées (12) de manière à transmettre le mouvement, de sorte que les deux éléments de serrage (3) peuvent être déplacés de manière synchrone.

7. Dispositif (1) selon la revendication 6, **caractérisé en ce que** le mouvement de deux éléments de serrage (3) reliés activement par des roues dentées (12) est synchronisé, par l'intermédiaire d'une barre de couplage (14) agissant sur les arbres (10) des éléments de serrage (3) et reliée à l'entraînement (11), avec le mouvement d'éléments de serrage (3) opposés et reliés activement par des roues dentées (12).

8. Dispositif (1) selon l'une des revendications précédentes, **caractérisé en ce que** les éléments d'appui (7) sont logés dans les éléments de serrage (3) de manière à pouvoir tourner autour de leur axe longitudinal.

9. Dispositif (1) selon l'une des revendications précédentes, **caractérisé en ce que** le dispositif de serrage (1) comprend au moins deux vérins de pneus (23) qui sont reliés aux éléments de serrage (3) par un mécanisme à levier (28) de telle sorte qu'un mouvement des éléments de serrage (3) provoque un mouvement linéaire des vérins de pneus (23).

10. Dispositif (1) selon l'une des revendications précédentes, **caractérisé en ce que** le dispositif de serrage (1) présente un support de jante (30) mobile verticalement et qui peut être amené en contact avec un alésage central de la jante (2).
